Europäisches Patentamt

(19) European Patent Office

Office européen des brevets

(11) Publication number: **0 226 238**
**B1**

(12) EUROPEAN PATENT SPECIFICATION

(45) Date of publication of patent specification: **18.10.89**

(21) Application number: **86202014.6**

(22) Date of filing: **15.11.86**

(51) Int. Cl.⁴: **B 60 P 3/07**

(54) **Device for loading the trailer onto the tractor of a motorcar-transporting road train.**

(30) Priority: **29.11.85 IT 6800185**

(43) Date of publication of application:
**24.06.87 Bulletin 87/26**

(45) Publication of the grant of the patent:
**18.10.89 Bulletin 89/42**

(84) Designated Contracting States:
**AT BE CH DE ES FR GB LI LU NL SE**

(56) References cited:
**FR-A-2 036 851**
**US-A-2 233 697**

**"Universal-Autotransporter MP-B/APT-B, 12/84 KA" issued by Kässbohrer Austria Fahrzeugwerke Ges.m.b.H.**

(73) Proprietor: **FASANO S.R.L.**
**Via Borgonuovo, 140**
**I-12060 Monchiero (Cuneo) (IT)**

(72) Inventor: **Testa, Sergio**
**Via Borgonuovo, 140**
**I-12060 Monchiero Cuneo (IT)**

(74) Representative: **Lotti, Giorgio**
**c/o Ing. Barzanò & Zanardo Milano S.p.A. Via Cernaia 20**
**I-10122 Torino (IT)**

Courier Press, Leamington Spa, England.

EP 0 226 238 B1

## Description

The invention relates to a device for loading the trailer in a simple and quick manner onto the tractor of a motorcar-transporting road train.

Usually, the transport of motorcars is carried out by means of particular road trains of the type described, for example, in "Universal-Autotransporter MP-B/APT-B, 12/84 KA", issued by Kässbohrer Austria Fahrzeugwerke Ges.m.b.H. After the delivery of the motorcars, in most cases, these road trains must return to the place of departure with no payload; the disadvantages of this technical solution are intuitive, and as the most evident and serious of them we mention the following.

In fact, a road train which carries out long runs is normally subjected to autostrada tolls and to passages on ferryboats, besides the normal consumption of fuel and the wear of the parts; all these costs are increased by the presence of the trailer, which affect both the payment of the autostrada and ferryboat tolls, which costs depend upon the distance between the axes and upon their quantity, and the consumption due to the higher resistance to the advancement, as well as the transfer speed.

If these burdens are, obviously, unavoidable when it is a question of delivering a load, they are only an increase of the costs and a waste of time when the return travel is carried out without payload.

The object of the device according to this invention is to load the trailer onto the tractor with the aid of lifting means incorporated into the trailer itself, thus avoiding all the disadvantages mentioned hereinabove; in fact, in this way the distance between the axes of the vehicle and their number will be only those of the tractor; the result thereof will be lower autostrada and ferryboat costs and lower consumption of fuel and wear of the trailer; it can be realized that such result may constitute a considerable cost reduction for transport means which daily make long runs.

To attain all these and further objects the present invention proposes to provide a device for supporting the trailer of a vehicle-transporting road train during the loading of the trailer onto the tractor, of the type in which the trailer is formed by a lower platform provided in the chassis of the trailer and connected to an upper platform with the aid of means which enable the upper platform to be lowered and raised relative to the lower platform, characterized in that the upper platform is provided with means which enable it to directly rest on the ground in its raised position relative to the lower platform, said means being such as to support the whole weight of the trailer, with the chassis raised towards the upper platform, at a distance from the ground greater than the distance of the loading platform of the tractor from the ground.

A preferred but certainly not limiting embodiment of the device according to the invention will now be described with reference to the annexed drawings, in which:

Figure 1 is a side view of the trailer with the upper platform in the lowered position and the device according to the invention in the rest position;

Figure 2 is a side view with the upper platform in the raised position and the device according to the invention in the first operative stage;

Figure 3 is a side view of the trailer in its raised position and the device according to the invention in the second operative stage;

Figure 4 is a side view of the trailer loaded on the loading platform of the tractor.

A trailer of known type is formed by a chassis 10 resting on the ground 12 by means of wheels 11; formed on the chassis is the lower loading platform 13; slidably hinged to the chassis are four stanchions 15 disposed in front and rear pairs and hinged by their other ends at 16 to the upper platform 17.

Also hinged at 18 to said lower platform 13 are four arms 19 which are hinged at their other ends to said stanchions 15 at the points 20.

Four hydraulic pistons 23 are hinged at 21 and 22 to said arms 19 and to the chassis 10 of the trailer, respectively.

This form of connection between the upper platform 17 and the lower platform 13 is given simply by way of example, it being preferred by the Applicant, but it is understood that any other new or already used form of connection is suitable and usable for trailers carrying the device according to the invention, formed as follows and also represented in a preferred embodiment.

Four arms disposed in front pairs 30 and rear pairs 31 are hinged at 32 to said upper platform 17; four hydraulic pistons are hinged to the upper ends of said arms 30 and 31 at the locations 34 to said upper platform 17 at 35.

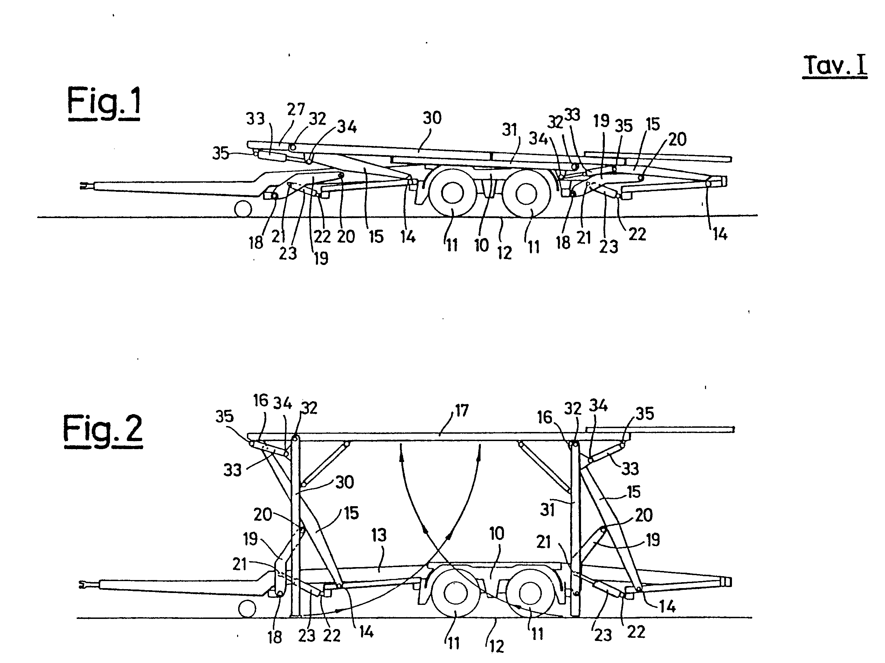

The arms 30 and 31 are rigid and of such a length as to rest on the ground when they are rotated from the rest position shown in Fig. 1 to the operative position shown in Fig. 2, by retraction of the rods of the respective pistons 33.

Since the arms 30 and 31 rotate from the interior of the trailer, they may strike against the wheels 11 if they are simply hinged to the upper platform. This does not happen in the case of the solution shown for the arms 30 which, besides all, are hinged outside the upper platform 17, but it is to be considered that in most cases the requirements of limiting the side encumbrance may not permit to hinge the arms 30 sideways, or said arms would strike against the wheels, as would certainly occur for the arms 31 hinged under the upper platform 17.

In order to avoid these disadvantages, the invention renders it possible to translate the arms 30 and 31 towards the outside before they are rotated, i.e. when they are in the rest position shown in Fig. 1, so as to dispose them outside the wheels 11 and thus not strike these latter during the lowering up to the position shown in Fig. 2.

This system may, for example, be formed by a bushing provided in the hinging point 32 of the arms 30 and 31 in which there are slidingly disposed pins of said arms, controlled individually or simultaneously by pistons or other analogous devices so as to slide in the bushing alternately to push the pins towards the outside when the arms have to be rotated and towards the inside when the arms are in the rest position.

The operation of the device according to the invention will now be described.

To initiate the operations of loading the trailer onto the tractor, platform 17 is raised from the position shown in Fig. 1 to the position shown in Fig. 2 with the aid of said means 15, 19 and 23 of known type.

The arms 30 and 31 are first traversed towards the outside for the reasons described hereinabove and they are rotated from the rest position shown in Fig. 1, in which they are aligned with the platform 17 by means of the hydraulic pistons 33, until they reach a position perpendicular to the ground, as shown in Fig. 2.

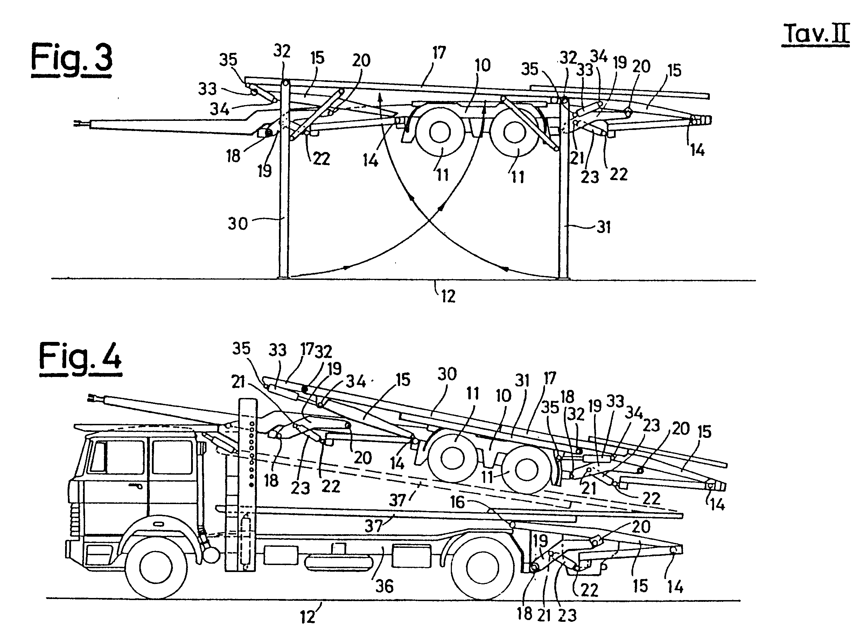

At this point the chassis 10 of the trailer is raised up to a suitable height (as shown in Fig. 3) with aid of the means 15, 19 and 23, i.e. the same means used for the translation of the upper platform 17.

The wheels 11 of the chassis will thus result positioned at such a height from the ground as to permit the tractor 36 to dispose itself under the raised trailer.

Should this height not be sufficient, it is possible to provide an hydraulically actuable telescopic end in order to further raise the trailer from the ground.

The chassis 10 of the trailer is then lowered still with the aid of the means 15, 19 and 23 to such an extent as to make it rest on the upper platform 37 of the tractor 36 previously raised till it touches lightly the wheels 11 of the trailer; the arms 30 and 31 are now rotated till they reach again the rest position and are enclosed transversally; platform 17 is then completely lowered onto the chassis 10 of the trailer.

Thus, the loading position is attained. After having anchored the trailer on the platform 37 of the tractor 36 it will be possible to incline this latter, still with the aid of the means 15, 19 and 23, till it reaches the position of Fig. 4, at least at the rear part in order to reach the final position shown in Fig. 4.

Obviously, the embodiment of the device for making the trailer rest on the ground and be raised, formed by the arms 30 and 31, is given by way of a non-limiting example.

In fact, first of all, the arms 30 and 31 may be hinged directly to the platform 17 in a manner different from that described hereinabove, or they may be hinged in the upper part to the stanchions 15 in order to be positioned side by side and parallel to said platform; instead of being superimposed in the rest position (Figs. 1 and 4). Also the rotation means 33 may be arranged in a different manner in a different number, or be different from hydraulic pistons, for example electromotors or manually controlled kinematic means, even if this latter technical solution seems to be uncomfortable and laborious.

The arms 30 and 31 may also be telescopic arms, pantograph arms or arms of any other desired configuration, depending on the preferences and the requirements to which the manufacturer has to conform himself.

In Fig. 4 there is shown a position for loading the trailer on a conventional tractor, but the trailer may also be loaded rotated through 180° or the tractor may be provided with means for hinging and lifting the upper platform which are different from those described hereinabove and of a type such as to further facilitate also the positioning on the upper platform of the trailer.

## Claims

1. A device for supporting the trailer of a vehicle-transporting road train during the loading of the trailer onto the tractor (36), of the type in which the trailer is formed by a lower platform (13) provided in the chassis (10) of the trailer and connected to an upper platform (17) with the aid of means which enable the upper platform (17) to be lowered and raised relative to the lower platform (17), characterized in that the upper platform (17) is provided with means (30, 31) which enable it to directly rest on the ground (12) in its raised position relative to the lower platform (13) said means (30, 31) being such as to support the whole weight of the trailer with the chassis (10) raised towards the upper platform (17) and positioned at a distance from the ground (12) greater than the distance of the loading platform (37) of the tractor (36) from the ground (12).

2. A device as claimed in Claim 1, characterized in that the means (15, 19, 23) for lifting the trailer towards the upper platform (17), when this latter rests directly on the ground (12), are the same means of connection of the two platforms (13, 17) which permit the lowering and the raising of the upper platform (17) relative to the lower (13).

3. A device as claimed in Claim 1, characterized in that the means for supporting of the upper platform (17) on the ground (12) are formed by arms disposed in front (30) and rear (31) pairs hinged to the platform and provided with actuator means (33) which make them rotate between a rest position, in which they are substantially aligned with the upper platform (17), and the support position on the ground (12), in which they are substantially perpendicular to said upper platform (17).

4. A device as claimed in Claim 3, characterized in that the actuator means (33) are formed by hydraulic pistons hinged to the upper platform (17) and to the arms (30, 31).

## Patentansprüche

1. Vorrichtung zum Abstützen des Anhängers eines Fahrzeugtransportlastzuges während des Ladens des Anhängers auf den Schlepper (36), jener Art, in welcher der Anhänger von einer im Fahrgestell (10) des Anhängers vorgesehenen unteren Plattform (13) gebildet ist, die mit einer oberen Plattform (17) mittels Einrichtungen verbunden ist, die es ermöglichen die obere Plattform (17) relativ zur unteren Plattform (17) anzuheben und abzusenken, dadurch gekennzeichnet,
daß die obere Plattform (17) mit Einrichtungen
(30, 31) versehen ist, welche sie in die Lage
versetzen in ihrer relativ zur unteren Plattform
(13) angehobenen Lage unmittelbar am Boden
(12) aufzuruhen, wobei diese Einrichtungen (30,
31) solcherart sind, daß sie das Gesamtgewicht
des Anhängers abstützen, wenn das Fahrgestell
(10) gegen die obere Plattform (17) hin angehoben ist und mit einem Abstand vom Boden (12)
gelegen ist, der größer ist als der Abstand der
Ladefläche (37) des Schleppers (36) vom Boden
(12).

2. Vorrichtung nach Anspruch 1, dadurch
gekennzeichnet, daß die Einrichtungen (15, 19,
23) zum Anheben des Anhängers in Richtung zur
oberen Plattform (17) bei unmittelbar auf den
Boden (12) aufruhender oberer Plattform die gleichen Verbindungsglieder der zwei Plattformen
(13, 17) sind wie jene, die das Absenken und das
Anheben der oberen Plattform (17) relativ zur
unteren Plattform (13) ermöglichen.

3. Vorrichtung nach Anspruch 1, dadurch
gekennzeichnet, daß die Einrichtungen zum
Abstützen der oberen Plattform (17) am Boden
(12) von Armen gebildet sind, die paarweise an
die Vorderseite (30) und die Rückseite (31) der
Plattform angelenkt und mit Betätigungseinrichtungen (33) ausgestattet sind, welche diese Arme
zwischen einer Ruhestellung, in welcher sie im
wesentlichen mit der oberen Plattform (17) fluchten, und einer Abstützstellung zum Abstützen am
Boden (12), in welcher sie im wesentlichen senkrecht zur erwähnten oberen Plattform (17) stehen,
verschwenken.

4. Vorrichtung nach Anspruch 3, dadurch
gekennzeichnet, daß die Betätigungseinrichtungen (33) von an die obere Plattform (17) und an
die Arme (30, 31) angelenkten Hydraulikkolben
gebildet sind.

**Revendications**

1. Dispositif pour porter la remorque d'un train
routier servant au transport de véhicules pendant
le chargement de cette remorque sur le véhicule
tracteur (36), du type dans lequel la remorque
comprend une plateforme inférieure (13) montée
sur le châssis (10) de cette remorque et réunie à
une plateforme supérieure (17) à l'aide de
moyens qui permettent d'élever et d'abaisser
cette plateforme supérieure (17) par rapport à la
plateforme inférieure (13), caractérisé en ce que la
plateforme supérieure (17) est munie de moyens
(30, 31) qui lui permettent de reposer directement
sur le sol (12) à sa position élevée par rapport à la
plateforme inférieure (13), ces moyens (30, 31)
étant tels qu'ils portent le poids totale de la
remorque avec le châssis (10) élevé jusqu'à la
plateforme supérieure (17) et étant disposé à une
distance du sol (12) supérieure à la distance par
rapport à ce sol (12) de la plateforme de chargement (37) du véhicule tracteur (36).

2. Dispositif selon la revendication 1, caractérisé en ce que les moyens (15, 19, 23) pour élever
la remorque jusqu'à la plateforme supérieure (17)
quand celle-ci repose directement sur le sol (12)
sont les mêmes que les moyens réunissant les
deux plateformes (13, 17) et permettant d'abaisser et d'élever la plateforme supérieure (17) par
rapport à la plateforme inférieure (13).

3. Dispositif selon la revendication 1, caractérisé en ce que les moyens pour porter la plateforme supérieure (17) sur le sol (12) sont constitués par des bras disposés en paires avant (30) et
arrière (31) articulées sur la plateforme et équipés
de moyens de manoeuvre (33) qui les font pivoter
entre une position de repos, à laquelle ils sont
substantiellement alignés avec la plateforme
supérieure (17), et la position de support sur le sol
(12) à laquelle ils sont substantiellement perpendiculaires à ladite plateforme supérieure (17).

4. Dispositif selon la revendication 3, caractérisé en ce que les moyens de manoeuvre (13) sont
des vérins hydrauliques articulés sur la plateforme supérieure (17) et sur les bras (30, 31).

## Fig.1

## Fig.2

EP 0 226 238 B1

## Fig.3

## Fig.4

EP 0 226 238 B1